# EUROPÄISCHE PATENTSCHRIFT

(11) **EP 1 654 900 B1**
(45) Veröffentlichungstag und Bekanntmachung des Hinweises auf die Patenterteilung: **04.07.2007**
(21) Anmeldenummer: 04741201.0
(22) Anmeldetag: 21.07.2004
(51) Int. Cl.: H04Q 7/38, G01S 13/76

(54) **Funknetzwerk zum Schutz elektrischer Geräte vor elektromagnetischer Strahlung einer moilen Station**
Radio network for protecting electronic devices from electromagnetic radiation of a mobile station
Réseau radio servant à proteger des appareils éléctroniques contre le rayonnement éléctromagnetique d'une station mobile

(30) Priorität: 11.08.2003 DE 10336733
(43) Veröffentlichungstag der Anmeldung: 10.05.2006
(73) Patentinhaber: SIEMENS AKTIENGESELLSCHAFT, 80333 München (DE)
(72) Erfinder: VOGEL, Bernhard, 91327 Gössweinstein (DE); WEDEL, Matthias, 90482 Nürnberg (DE)
(86) Internationale Anmeldenummer: PCT/EP2004/008163
(87) Internationale Veröffentlichungsnummer: WO 2005/018263

(56) Entgegenhaltungen:
- EP-A- 1 035 746
- WO-A-01/92988
- US-A- 2003 114 104
- US-B1- 6 343 213

## Beschreibung

Schutzeinrichtung sowie Verfahren zum Schutz eines zweiten Geräts vor den elektromagnetischen Strahlen eines ersten Gerätes

Die Erfindung betrifft eine Schutzeinrichtung sowie ein Verfahren zum Schutz eines zweiten Geräts vor den elektromagnetischen Strahlen eines ersten Gerätes, insbesondere für den Einsatz in Krankenhäusern.

Eine derartige Schutzeinrichtung sowie ein derartiges Verfahren ist beispielsweise aus der US 6,343,213 B1 bekannt.

Drahtlose Kommunikationsnetzwerke, insbesondere unter der Bezeichnung WLAN (wireless local aerea network) bekannte Funknetzwerke, werden häufig in Gebäuden eingesetzt.

Aus der US 2003/0114104 A1 ist zur Gewährleistung einer sicheren drahtlosen Kommunikation zwischen einem zentralen Zugangspunkt und einem mobilen Gerät über eine Bluetooth-Schnittstelle eine Abstandserfassung zwischen dem Zugangspunkt und dem mobilen Gerät mit Hilfe eines RFID-Systems (Radio frequency identification) vorgesehen. Nur innerhalb eines über das RFID bestimmten Bereichs von dem Zugangspunkt wird eine Kommunikation zugelassen.

Beschränkungen im Einsatz solcher Funknetzwerke ergeben sich oft durch gegenüber elektromagnetischer Strahlung empfindliche Geräte, insbesondere in Krankenhäusern. In Bereichen, in denen sich Geräte, beispielsweise Beatmungsgeräte, befinden, die möglicherweise durch elektromagnetische Strahlung beeinflussbar sind, wird daher üblicherweise auf den Einsatz von Funknetzwerken verzichtet.

Ein System zur Umstellung des Betriebsmodus von Mobilfunkgeräten in gefährdeten Bereichen, wie Krankenhäusern, ist bei spielsweise aus der US 6,343,213 B1 bekannt. Hierbei kann eine Basisstation an das Mobilfunkgerät ein Signal senden, welches eine Umschaltung auf eine geringere Leistung oder eine Abschaltung des Mobilfunkgerätes bewirkt.

Ein weiteres System zum Schutz eines bestimmten Bereiches vor Einwirkungen durch Mobilfunkgeräte ist aus der EP 1 035 746 A1 bekannt. Bei diesem System sind Schutzeinrichtungen vorgesehen, die unabhängig vom Telekommunikationssystem, insbesondere mit anderen Funkfrequenzen, arbeiten.

Der Erfindung liegt die Aufgabe zugrunde, zusätzliche Einsatzgebiete für Funknetzwerke in Bereichen, in welchen sich gegenüber elektromagnetischer Strahlung empfindliche Geräte befinden, insbesondere in Krankenhäusern, zu erschließen.

Diese Aufgabe wird erfindungsgemäß gelöst durch eine Schutzeinrichtung mit den Merkmalen des Anspruchs 1 sowie durch ein Verfahren mit den Merkmalen des Anspruchs 7. Hierbei ist ein erstes Gerät ein einen Sender aufweisendes Gerät eines Funknetzwerkes, während ein zweites Gerät ein vor der elektromagnetischen Strahlung des Senders zu schützendes Gerät ist. Eines der beiden Geräte weist ein drahtloses Abfragesystem auf, welches mit einem Transponder als Rückstrahlvorrichtung des anderen Gerätes zusammenwirkt. Das Abfragesystem bildet zusammen mit der Rückstrahlvorrichtung ein berührungsloses Detektionssystem, welches dem ersten und/oder zweiten Gerät eine zumindest grobe Information über die Distanz zwischen den beiden Geräten liefert. Vorzugsweise ist das den Sender aufweisende Gerät des Funknetzwerkes zugleich auch mit dem Abfragesystem ausgerüstet, während das hinsichtlich der elektromagnetischen Strahlung des Funknetzwerkes sensible zweite Gerät die als Transponder ausgebildete Rückstrahlvorrichtung aufweist. In dieser Konstellation ist die elektromagnetische Belastung des zweiten, durch elektromagnetische Strahlung gefährdeten Gerätes, insbesondere medizintechnischen Gerätes, insgesamt überwacht und kontrolliert werden.

Abhängig u.a. von Art und Größe der Geräte kann jedoch auch das zweite, vor der Strahlung des Funknetzwerkes zu schützende Gerät eine Sende- und Empfangseinheit eines berührungslos arbeitenden Abfragesystems aufweisen, während das einen Teil des Funknetzwerkes bildende erste Gerät eine korrespondierende Rückstrahlvorrichtung aufweist.

In Abhängigkeit von der mittels des berührungslosen Näherungsmesssystems gemessenen Distanz zwischen den Geräten erfolgt eine Umschaltung zwischen zwei verschiedenen Betriebsmodi, nämlich einem Normalbetriebsmodus und einem für kürzere Distanzen vorgesehenen Sonderbetriebsmodus, mindestens eines der Geräte. Unter Distanz soll dabei ein von der Distanz abhängiges, durch das Messsystem messbares, Distanz-Signal verstanden werden. Zusätzlich zum geometrischen Abstand zwischen den Geräten wird hierbei auch eine eventuelle Beeinflussung der vom Sender ausgehenden Strahlung durch strahlungsabsorbierende oder -reflektierende Elemente berücksichtigt. Mit anderen Worten: Entscheidend für die Umschaltung zwischen den verschiedenen Betriebsmodi ist der Grad der Abschwächung der vom Sender ausgehenden elektromagnetischen Strahlung am Ort des zweiten Gerätes.

In einer ersten Ausführungsform ist in den verschiedenen Sendemodi die Sendeleistung des Senders des ersten Gerätes unterschiedlich eingestellt. Die Sendeleistung kann hierbei stufenweise oder stufenlos abgesenkt werden. Bei unzulässig hohen elektromagnetischen Feldstärken im Bereich des zweiten Gerätes besteht auch die Möglichkeit, den Sender automatisch abzuschalten. Eine Gefährung des zweiten Gerätes durch die Sendeeinheit des berührungslos arbeitenden Abfragesystems ist dagegen in der Regel nicht anzunehmen. Das Abfragesystem wird daher, sowohl in Ausgestaltungen, in denen dieses, wie vorzugsweise vorgesehen, im ersten Gerät integriert ist, als auch in Ausgestaltungen, in denen das erste Gerät lediglich die Rückstrahlvorrichtung umfasst, typischerweise mit konstanten Betriebsparametern, insbesondere konstanter Sendeleistung, betrieben. Ist eine Gefährdung des zweiten Gerätes durch die beim Betrieb des Abfragesystems auftretende Strahlung nicht auszuschließen, so ist abweichend hiervon auch eine Variation der Betriebsparameter des Abfragesystems in Abhängigkeit von der gemessenen Distanz zwischen den beiden Geräten möglich.

Zusätzlich oder alternativ zur Variation der Sendeleistung ist nach einer bevorzugten Weiterbildung die Ausgabe einer Warnmeldung durch eines der Geräte in Abhängigkeit vom Betriebsmodus vorgesehen. Unabhängig von oder zusätzlich zu einer generierten Warnmeldung kann die Möglichkeit einer automatischen Abschaltung des zu schützenden zweiten Gerätes vorgesehen sein. Vorzugsweise passt das durch die elektromagnetische Strahlung gefährdete Gerät seinen Betrieb automatisch der Gefährdung an. In besonders bevorzugter Ausgestaltung ist bei Detektion einer Annäherung zwischen den beiden Geräten mittels des berührungslosen Näherungsmesssystems eine Betriebsmodusumstellung sowohl des ersten, gefährdenden Gerätes als auch des zweiten, gefährdeten Gerätes vorgesehen, wobei als Spezialfall einer Betriebsmodusumstellung jeweils auch eine Einstellung des Betriebes umfasst ist.

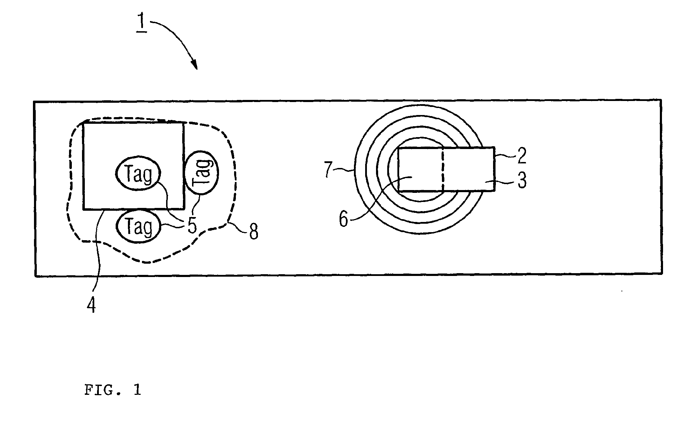

Ein Ausführungsbeispiel der Erfindung wird nachfolgend anhand einer Zeichnung näher erläutert. Hierin zeigt die einzige Figur anhand eines schematischen Lageplans ein Funknetzwerk.

Ein beispielsweise in einem Krankenhaus installiertes Funknetzwerk 1 umfasst zusätzlich zu einer Anzahl nicht dargestellter Feststationen ein typischerweise mobiles Gerät 2, welches einen Sender 3 aufweist. Durch die vom Sender 3 ausgehende Strahlung des ersten Gerätes 2, beispielsweise eines Mobiltelefons oder eines WEB-Tabletts, ist ein zweites Gerät 4, beispielsweise ein Beatmungsgerät, welches nicht Teil des Funknetzwerkes 1 ist, potentiell gefährdet.

Das zweite Gerät 4 weist mindestens eine, bevorzugt mehrere Rückstrahlvorrichtungen 5 in Form von Transpondern (TAGs) auf, welche beispielsweise als Etiketten auf das zweite Gerät 4 aufgeklebt sind. Alternativ können Rückstrahlvorrichtungen 5 beispielsweise auch in Form von Röhrchen am zweiten Gerät 4 befestigt sein. Mit den Rückstrahlvorrichtungen 5 wirkt in an sich, beispielsweise aus der DE 197 03 823 C1 bekannter Weise ein eine Sende-/Empfangseinheit umfassendes Abfragesystem 6 des ersten Gerätes 2 zusammen. Der nicht näher dargestellte Sender des Abfragesystems 6 ist nicht notwendigerweise Teil des Funknetzwerks 1. Die vom Sender des Abfragesystems 6 ausgehende Strahlung ist in der Figur durch konzentrische Kreise symbolisiert und kennzeichnet einen Erkennungsbereich 7, in welchem das Abfragesystem 6 die Anwesenheit einer Rückstrahlvorrichtung 5 detektieren kann. Der Erkennungsbereich 7 erstreckt sich typischerweise über eine Distanz in der Größenordnung von 1 m. Hieraus ergibt sich eine das zweite Gerät 4 umgebende strichliert eingezeichnete Sicherheitszone 8. Wird das erste Gerät 2 in die Sicherheitszone 8 bewegt, so schaltet das erste Gerät 2 automatisch von einem ersten Betriebsmodus, dem Normalbetriebsmodus N2, in einen zweiten Betriebsmodus, den Sonderbetriebsmodus S2 um.

Die Betriebsparameter des Sonderbetriebsmodus S2 sind einstellbar. Hierbei ist vorzugsweise vorgesehen, dass der Sender 3 des ersten Gerätes 2 in der Sicherheitszone 8 die Sendeleistung reduziert oder den Betrieb teilweise oder vollständig einstellt, um eine Gefährdung des zweiten Gerätes 4 auszuschließen. Des Weiteren ist vorgesehen, dass das erste Gerät 2 bei dessen Positionierung in der Sicherheitszone 8 eine Warnmeldung ausgibt, welche beispielsweise vor einem Betrieb des ersten Gerätes 2 in der Nähe des zweiten Gerätes 4 warnt oder zu einer Entfernung des ersten Gerätes 2 aus der Sicherheitszone 8 auffordert.

Alternativ zum dargestellten Ausführungsbeispiel kann auch das gefährdete zweite Gerät 4 das Abfragesystem 6 aufweisen, während das den Sender 3 umfassende erste Gerät 2 mindestens eine Rückstrahlvorrichtung (TAG) 6 aufweist. In diesem Fall kann auf besonders einfache Weise das zweite Gerät 4, welches das Abfragesystem 6 ausliest, bei Annäherung des ersten Gerätes 2 eine Warnmeldung ausgeben. Des weiteren ist eine besonders einfache Möglichkeit geschaffen, den Betrieb des zweiten Gerätes 4 durch eine Umschaltung von einem Normalbetriebsmodus N4 auf einen Sonderbetriebsmodus S4, etwa ein Notlaufprogramm, auf die Gefährdung durch die vom ersten Gerät 2 ausgehende elektromagnetische Strahlung einzustellen. Die Anordnung einer Rückstrahlvorrichtung 6 am ersten Gerät 2 hat des Weiteren den Vorteil, dass keine permanente Ausrüstung des ersten Gerätes 2 mit einem drahtlosen Abfragesystem erforderlich ist, sondern bedarfsweise, beispielsweise ausschließlich beim Aufenthalt in einem gefährdeten Bereich wie einem Krankenhaus, die Rückstrahlvorrichtung 5 am ersten Gerät 2 befestigt, beispielsweise aufgeklebt oder angeclipst werden kann.

## Patentansprüche

1. Schutzeinrichtung zum Schutz eines zweiten Geräts (4) vor den elektromagnetischen Strahlen eines ersten Gerätes (2), das Teil eines Funknetzwerkes ist und einen die elektromagnetische Strahlung abstrahlenden Sender (3) aufweist, wobei
- mindestens eines der Geräte (2,4) ortsveränderlich ist,
- eines der Geräte (2,4) ein drahtloses Abfragesystem (6) umfasst, welches mit einer Rückstrahlvorrichtung (5) des anderen Gerätes (4,2) zusammenwirkt,
- eines der Geräte (2,4) derart ausgebildet ist, dass in Abhängigkeit von der mittels des Abfragesystems (6) und der Rückstrahlvorrichtung (5) detektierten Distanz zum anderen Gerät zwischen einem Normalbetriebsmodus (N2,N4) und einem für vergleichsweise kurze Distanzen vorgesehenen Sonderbetriebsmodus (S2,S4) umgeschalten wird, und wobei
- der Betriebsmodus (N2,S2) des den Sender (3) aufweisenden ersten Gerätes (2) variabel ist, **dadurch gekennzeichnet, dass** eines der Geräte (2,4) einen Transponder als Rückstrahlvorrichtung (5) aufweist.

2. Einrichtung nach Anspruch 1, **dadurch gekennzeichnet, dass** der Sender (3) eine vom Betriebsmodus (N2,S2) abhängige Sendeleistung aufweist.

3. Einrichtung nach einem der Ansprüche 1 oder 2, **dadurch gekennzeichnet, dass** der Sonderbetriebsmodus (S2,S4) eines der Geräte (2,4) die Ausgabe einer Warnmeldung umfasst.

4. Einrichtung nach Anspruch 3, **dadurch gekennzeichnet, dass** die Ausgabe der Warnmeldung durch das erste Gerät (2) vorgesehen ist und eine Warnung vor weiterer Annäherung an das zweite Gerät (4) und/oder einen Hinweis auf einen erforderlichen größeren Abstand zum zweiten Gerät (4) umfasst.

5. Einrichtung nach Anspruch 3 oder 4, **dadurch gekennzeichnet, dass** die Ausgabe der Warnmeldung durch das zweite Gerät (4) vorgesehen ist und eine Warnung vor dessen Gefährdung durch das erste Gerät (2) umfasst.

6. Verfahren zum Schutz eines zweiten Geräts (4) vor den elektromagnetischen Strahlen eines ersten Gerätes (2), das Teil eines Funknetzwerkes ist und einen die elektromagnetische Strahlung abstrahlenden Sender (3) aufweist, wobei gesteuert durch ein berührungsloses Näherungsmesssystem (5,6) abhängig vom Abstand zwischen den beiden Geräten (2,4) eine Umschaltung zwischen einem Normalbetriebsmodus (N2,N4) und einem für vergleichsweise kurze Distanzen vorgesehenen Sonderbetriebsmodus (S2,S4) eines der Geräte (2,4) erfolgt, wobei im Sonderbetriebsmodus (S2,S4) der Sender (3) mit reduzierter Sendeleistung betrieben wird, **dadurch gekennzeichnet, dass** das Näherungsmesssystem (5,6) einen Transponder als Rückstrahlvorrichtung (5) eines der Geräte (2,4) umfasst.

7. Verfahren nach Anspruch 6, **dadurch gekennzeichnet, dass** mit Umstellung in den Sonderbetriebsmodus (S2,S4) der Betrieb des Senders (3) eingestellt wird.

## Claims

1. Protective arrangement for protecting a second device (4) from the electromagnetic rays of a first device (2) which is part of a radio network and has a transmitter (3) emitting the electromagnetic radiation, wherein
- at least one of the devices (2,4) is mobile,
- one of the devices (2,4) includes a wireless interrogation system (6) which interacts with a reflecting device (5) of the other device (4,2),
- one of the devices (2,4) is embodied in such a way that, as a function of its distance from the other device detected by means of the interrogation system (6) and the reflecting device (5), a switchover is effected between a normal operating mode (N2,N4) and a special operating mode (S2,S4) provided for comparatively short distances, and wherein
- the operating mode (N2,S2) of the first device (2) having the transmitter (3) is variable, **characterised in that** one of the devices (2,4) has a transponder as a reflecting device (5).

2. Arrangement according to claim 1, **characterised in that** the transmitter (3) has a transmit power that is dependent on the operating mode (N2,S2).

3. Arrangement according to one of claims 1 or 2, **characterised in that** the special operating mode (S2,S4) of one of the devices (2,4) includes the output of a warning message.

4. Arrangement according to claim 1, **characterised in that** the output of the warning message is provided by the first device (2) and includes a warning against coming into closer proximity to the second device (4) and/or an indication that a greater distance from the second device (4) is necessary.

5. Arrangement according to claim 3 or 4, **characterised in that** the output of the warning message is provided by the second device (4) and includes a warning against its being exposed to danger by the first device (2).

6. Method for protecting a second device (4) from the electromagnetic rays of a first device (2) which is part of a radio network and has a transmitter (3) emitting the electromagnetic radiation, wherein, as a function of the distance between the two devices (2,4), a switchover is effected between a normal operating mode (N2,N4) and a special operating mode (S2,S4), provided for comparatively short distances, of one of the devices (2,4) under the control of a contactless proximity measuring system (5,6), wherein the transmitter (3) is operated at reduced transmit power in the special operating mode (S2,S4), **characterised in that** the proximity measuring system (5,6) includes a transponder as the reflecting device (5) of one of the devices (2, 4) .

7. Method according to claim 6, **characterised in that** the operation of the transmitter (3) is suspended with changeover to the special operating mode (S2,S4).

## Revendications

1. Dispositif de protection destiné à protéger un second appareil (4) contre les rayons électromagnétiques d'un premier appareil (2) lequel fait partie d'un réseau radio et comprend un émetteur (3) émettant le rayonnement électromagnétique, dans lequel
- au moins l'un des appareils (2, 4) est mobile,
- l'un des appareils (2, 4) comprend un système interrogateur sans fil (6) lequel coopère avec un dispositif réfléchissant (5) de l'autre appareil (4, 2),
- l'un des appareils (2, 4) est conçu de telle manière pour commuter en fonction de la distance par rapport à l'autre appareil, détectée au moyen du système interrogateur (6) et du dispositif réfléchissant (5) entre un mode de fonctionnement normal (N2, N4) et un mode de fonctionnement spécial (S2, S4) prévu pour des distances comparativement courtes, et dans lequel
- le mode de fonctionnement (N2, S2) du premier appareil (2) comprenant l'émetteur (3) est variable, **caractérisé en ce que** l'un des appareils (2, 4) comprend un transpondeur comme dispositif réfléchissant (5).

2. Dispositif selon la revendication 1, **caractérisé en ce que** l'émetteur (3) possède une puissance d'émission qui dépend du mode de fonctionnement (N2, S2).

3. Dispositif selon l'une des revendications 1 ou 2, **caractérisé en ce que** le mode de fonctionnement spécial (S2, S4) d'un des appareils (2, 4) comprend l'émission d'un message d'avertissement.

4. Dispositif selon la revendication 3, **caractérisé en ce que** l'émission du message d'avertissement est prévue par le premier appareil (2) et comprend un avertissement contre davantage de rapprochement du second appareil (4) et/ou une indication sur la nécessité d'une plus grande distance par rapport au second appareil (4).

5. Dispositif selon la revendication 3 ou 4, **caractérisé en ce que** l'émission du message d'avertissement est prévue par le second appareil (4) et comprend un avertissement contre la mise en danger de celui-ci par le premier appareil (2).

6. Procédé destiné à protéger un second appareil (4) contre les rayons électromagnétiques d'un premier appareil (2) lequel fait partie d'un réseau radio et comprend un émetteur (3) émettant le rayonnement électromagnétique, dans lequel a lieu une commutation commandée par un système de mesure d'approche sans fil (5, 6) en fonction de la distance entre les deux appareils (2, 4) entre un mode de fonctionnement normal (N2, N4) et un mode de fonctionnement spécial (S2, S4) prévu pour des distances comparativement courtes d'un des appareils (2, 4), dans ledit mode de fonctionnement spécial (S2, S4) l'émetteur (3) fonctionnant à puissance d'émission réduite, **caractérisé en ce que** le système de mesure d'approche (5, 6) comprend un transpondeur comme dispositif réfléchissant (5) d'un des appareils (2, 4).

7. Procédé selon la revendication 6, **caractérisé en ce que** la commutation en mode de fonctionnement spécial (S2, S4) fait cesser le fonctionnement de l'émetteur (3).
